# EUROPEAN PATENT APPLICATION

(11) **EP 4 083 950 A1**
(43) Date of publication of application: **02.11.2022**
(21) Application number: 20908272.6
(22) Date of filing: 03.12.2020
(51) Int. Cl.: G07G 1/00, G07G 1/12

(54) **IMAGE DATA REGISTRATION SYSTEM AND IMAGE DATA REGISTRATION METHOD**

(30) Priority: 25.12.2019 JP 2019234581
(71) Applicant: Kyocera Corporation, Kyoto-shi Kyoto 612-8501 (JP)
(72) Inventor: DAI,Xiaoyan, Kyoto-shi, Kyoto 612-8501 (JP)
(74) Representative: Viering, Jentschura & Partner mbB Patent- und Rechtsanwälte
(86) International application number: PCT/JP2020/044958
(87) International publication number: WO 2021/131563

(57) **Abstract**

An image data registration system including a first storage unit 3a and an image processing unit 2, wherein the first storage unit 3a stores images input from an input unit 1, and the image processing unit 2 acquires at least one image satisfying a predetermined condition from the images stored in the first storage unit 3a and links the acquired image with the input product code.

## Description

### CROSS REFERENCES TO RELATED APPLICATION

This application claims the priority of Japanese Patent Application No. 2019-234581 (filed December 25, 2019), the entire contents of which are incorporated herein by reference.

### Technical Field

The present invention relates to an image data registration system and an image data registration method.

### Background Art

In relation to a POS (Point of sale) system, a technique of automatically identifying a product by utilizing an image captured by a camera is disclosed (for example, Patent Literature (PTL) 1).

### Citation List

### Patent Literature

PTL 1: Japanese Unexamined Patent Application Publication No. 2017-220198

### Summary of Invention

An image data registration system according to one aspect of the present disclosure includes a first storage unit and an image processing unit. The first storage unit stores images input from an input unit. The image processing unit acquires at least one image satisfying a predetermined condition from the images stored in the first storage unit and links the image acquired by the image processing unit with the input product code.

An image data registration method according to one aspect of the present disclosure includes storing an image input from an input unit in a first storage unit, acquiring a product code input from the input unit, acquiring at least one image satisfying a predetermined condition from the first storage unit, and linking the image acquired from the first storage unit with the product code.

### Brief Description of Drawings

[Fig. 1] Fig. 1 is a functional block diagram illustrating a schematic configuration of an image data registration system according to a first embodiment of the present disclosure.
[Fig. 2] Fig. 2 is an external view of the image data registration system according to the first embodiment of the present disclosure.
[Fig. 3] Fig. 3 is a flowchart illustrating an image data registration method used in the image data registration system according to the first embodiment of the present disclosure.
[Fig. 4] Fig. 4 is an image representation of a database registered by the image data registration system according to the first embodiment of the present disclosure.
[Fig. 5] Fig. 5 is a flowchart illustrating an image data registration method used in an image data registration system according to a second embodiment of the present disclosure.
[Fig. 6] Fig. 6 is a flowchart illustrating an image data registration method used in an image data registration system according to a third embodiment of the present disclosure.
[Fig. 7] Fig. 7 is an image representation of a database registered by the image data registration system according to the third embodiment of the present disclosure. Description of Embodiments

Examples of an image data registration system according to the present disclosure will be described below with reference to the drawings.

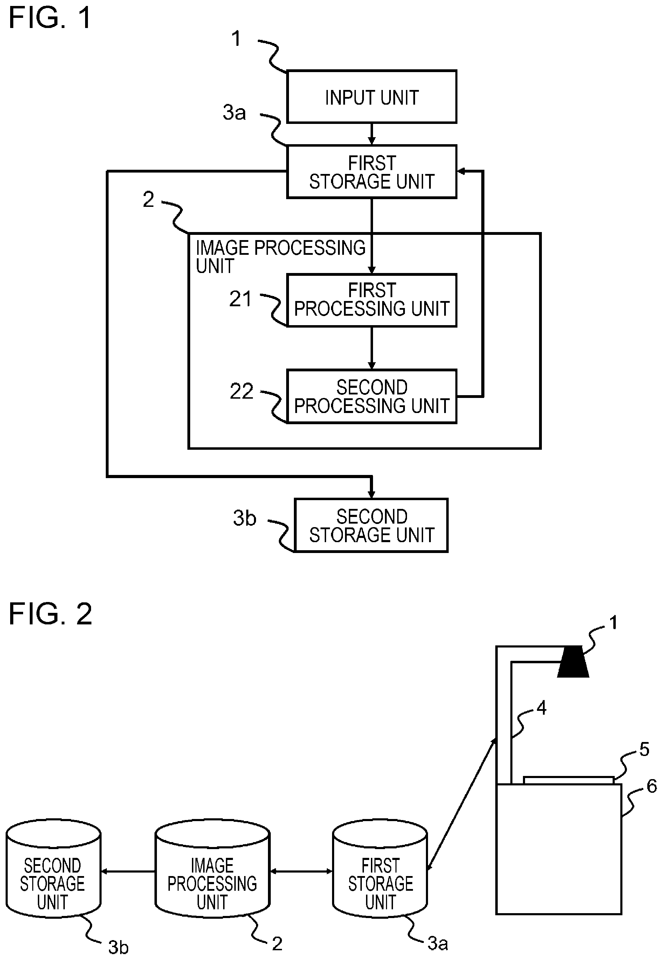

As illustrated in Figs. 1 and 2, an image data registration system according to a first embodiment of the present disclosure includes an input unit 1, an image processing unit 2, and a first storage unit 3a. The image data registration system may further include a second storage unit 3b, a holder 4, a flat placement member 5, and a housing 6.

In the drawings described below, a solid-line arrow connecting functional blocks indicates a flow of a control signal or information to be communicated. The communication indicated by the arrow may be performed in a wired or wireless mode or in a combination of both the modes.

The input unit 1 inputs a product image or a product code (described later) to the image processing unit 2 (described later).

To capture an image of the product code or the product, the input unit 1 includes an imaging optical system and an imaging device. The imaging optical system includes optical members such as at least one lens and diaphragm. The lens may be any type of lens regardless of a focal length and may be, for example, a general lens, a wide-angle lens including a fisheye lens, or a zoom lens with a variable focal length. The imaging optical system focuses an object image on a light receiving surface of the imaging device. The imaging device includes, for example, a CCD (Charge Coupled Device) image sensor or a CMOS (Complementary Metal-Oxide Semiconductor) image sensor. The imaging device captures the object image focused on the light receiving surface and produces a captured image. The imaging optical system may be disposed as illustrated in Fig. 2 or may be disposed at another suitable position such as at a ceiling, for example, where the imaging device can capture an image of an operator's input operation. Furthermore, to scan the product code, the input unit 1 may include a code scanner in accordance with a code scanning method including, for example, a CCD method, a laser method, or a pen method. The imaging optical system and the code scanner are not always required to be disposed in an integral form and may be disposed separately from each other.

The input unit 1 may be disposed in a payment machine that is used for payment of products purchased by consumers. The payment machine includes, for example, a cashless register terminal.

The first storage unit 3a stores the images captured by the input unit 1.

The image processing unit 2 includes a first processing unit 21 and a second processing unit 22.

The first processing unit 21 acquires the product code having been taken into the input unit 1. A method of acquiring the product code includes, for example, a method of recognizing an image (indicating the product code here), namely the image taken into the input unit 1, based on mechanical learning including deep learning, pattern matching, or the like, or a matching process for the product code assigned to each product and taken into the input unit 1. The product code includes, for example, a bar code, a QR code (registered trademark), or an identification marker. With the identification of the product code, the first processing unit 21 can acquire not only the image, but also information (including, for example, the price, the product name, or the producer) in relation to the product code assigned to the product in the image.

The second processing unit 22 acquires at least one image satisfying a predetermined condition from the images stored in the first storage unit 3a, generates a linked data set containing the acquired image and the product code taken into the input unit 1 which are linked with each other, and stores the generated data set in the second storage unit 3b (described later).

The image processing unit 2 includes a processor such as a CPU (Central Processing Unit), a GPU (Graphics Processing Unit), or a FPGA (Field-Programmable Gate Array). The image processing unit 2 may further separately includes a temporary storage unit into which data obtained during the processing in the first processing unit 21 and the second processing unit 22 (described later) is to be loaded. The temporary storage unit may be constituted by one or more of, for example, a semiconductor memory, a magnetic memory, and an optical memory. Examples of the semiconductor memory may include a volatile memory and a nonvolatile memory. Examples of the magnetic memory may include a hard disk and a magnetic tape. Examples of the optical memory may include a CD (Compact Disc), a DVD (Digital Versatile Disc), and a BD (Blu-ray (registered trademark) Disc).

The second storage unit 3b links the image captured by the input unit 1 with a recognition result in the image processing unit 2 and stores linked data.

The first storage unit 3a and the second storage unit 3b may be each constituted by one or more of, for example, a semiconductor memory, a magnetic memory, and an optical memory. Examples of the semiconductor memory may include a volatile memory and a nonvolatile memory. Examples of the magnetic memory may include a hard disk and a magnetic tape. Examples of the optical memory may include a CD (Compact Disc), a DVD (Digital Versatile Disc), and a BD (Blu-ray (registered trademark) Disc).

The image processing unit 2, the first storage unit 3a, and the second storage unit 3b are each not always required to be on-premises. For example, at least one of the image processing unit 2, the first storage unit 3a, and the second storage unit 3b may execute processing on a cloud according to a Web service. In that case, the input unit 1 may be only one physical component in the image data registration system.

The holder 4 holds the input unit 1.

There are no specific limitations on the material, shape, size, and so on of the holder 4. The arrangement of the holder 4 is also not specifically limited. While the holder 4 is disposed on the housing 6 (described later) in Fig. 2, the holder 4 is not always required to be disposed on the housing 6. In other words, the holder 4 may be any suitable type insofar as the holder 4 can hold the input unit 1.

The product of which image is to be captured by the input unit 1 is placed on the flat placement member 5.

There are no specific limitations on the material, shape, size, and so on of the flat placement member 5. The arrangement of the flat placement member 5 is also not specifically limited. While the flat placement member 5 is disposed on a surface of the housing 6 (described later) facing the input unit 1 in Fig. 2, the flat placement member 5 is not always required to be disposed as illustrated in Fig. 2. In other words, the flat placement member 5 may be any suitable type insofar as the product of which image is to be captured by the input unit 1 can be placed on the flat placement member 5. When an operator grasps and holds the product toward the input unit 1 with one or both hands to capture the image of the product, the flat placement member 5 is no longer required.

The housing 6 includes the holder 4 and the flat placement member 5.

There are no specific limitations on the material, shape, size, and so on of the housing 6. When the image data registration system does not include the holder 4 and the flat placement member 5, the housing 6 is no longer required.

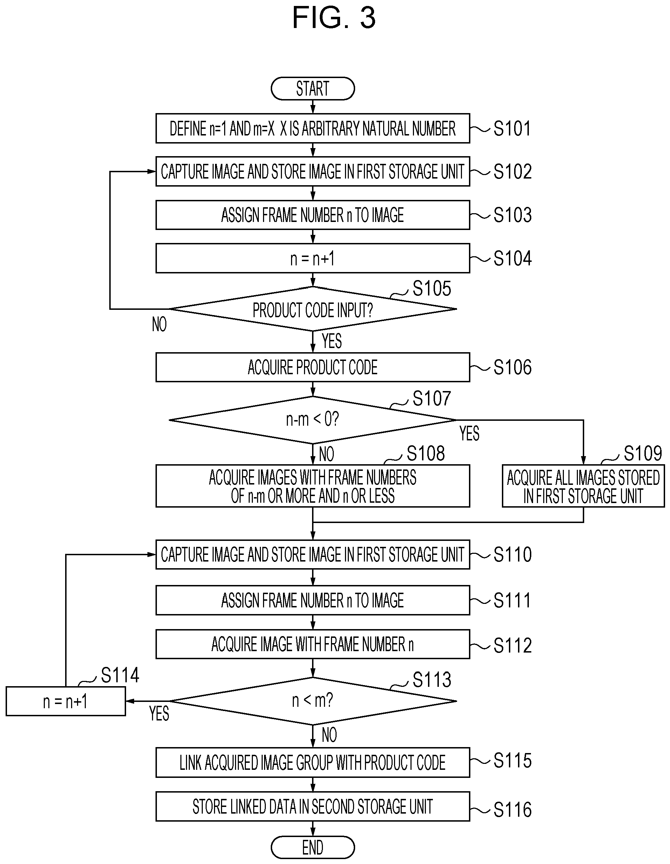

A processing flow of an image data registration method executed in the image data registration system according to the first embodiment of the present disclosure will be described below with reference to Fig. 3. In the image data registration system according to the first embodiment, acquiring images at the time of acquiring the product code and at the times before and after the acquisition of the product code is set as a predetermined condition with respect to the acquisition of the images. This condition enables the image data registration system to register multiple images of the product together in a lump.

### <S101>

The first processing unit 21 defines a parameter n indicating the frame number and a parameter m determining the number of captured frames to be n = 1 and m = X (X is an arbitrary natural number), respectively. Then, the processing advances to <S102>.

### <S102>

The input unit 1 captures an image of a product and stores the captured image in the first storage unit 3a. Then, the processing advances to <S103>. The first storage unit 3a may delete the stored image satisfying any appropriate condition (for example, the image for which a certain time has lapsed after being captured).

### <S103>

The first processing unit 21 assigns, as the frame number, n to the image stored in the first storage unit 3a. Then, the processing advances to <S104>.

### <S104>

The first processing unit 21 executes n = n+1. Then, the processing advances to <S105>.

### <S105>

The first processing unit 21 determines whether the product code is input from the input unit 1. If the product code is input, the processing advances to <S106>. If the product code is not input, the processing returns to <S102>.

### <S106>

The first processing unit 21 acquires the product code input from the input unit 1. Then, the processing advances to <S107>.

### <S107>

The first processing unit 21 determines whether n-m < 0 is satisfied. If n-m < 0 is satisfied, the processing advances to <S108>. If n-m < 0 is not satisfied, the processing advances to <S109>.

### <S108>

The first processing unit 21 acquires, from the first storage unit 3a, the images with the frame numbers of n-m or more and n or less. Then, the processing advances to <S110>.

### <S109>

The first processing unit 21 acquires all the images stored in the first storage unit 3a. Then, the processing advances to <S110>.

### <S110>

The input unit 1 captures an image of the product and stores the captured image in the first storage unit 3a. Then, the processing advances to <S111>.

### <S111>

The first processing unit 21 assigns, as the frame number, n to the image stored in the first storage unit 3a. Then, the processing advances to <S112>.

### <S112>

The first processing unit 21 acquires, from the first storage unit 3a, the image with the frame number n. Then, the processing advances to <S113>.

### <S113>

The first processing unit 21 determines whether n < m is satisfied. If n < m is satisfied, the processing advances to <S114>. If n < m is not satisfied, the processing advances to <S115>.

### <S114>

The first processing unit 21 executes n = n+1. Then, the processing returns to <S110>.

### <S115>

The second processing unit 22 links the at least one acquired image (hereinafter referred to as an "image group") with the product code and generates linked data. Then, the processing advances to <S116>.

### <S116>

The second processing unit 22 stores the linked data in the second storage unit 3b. Then, the processing is ended.

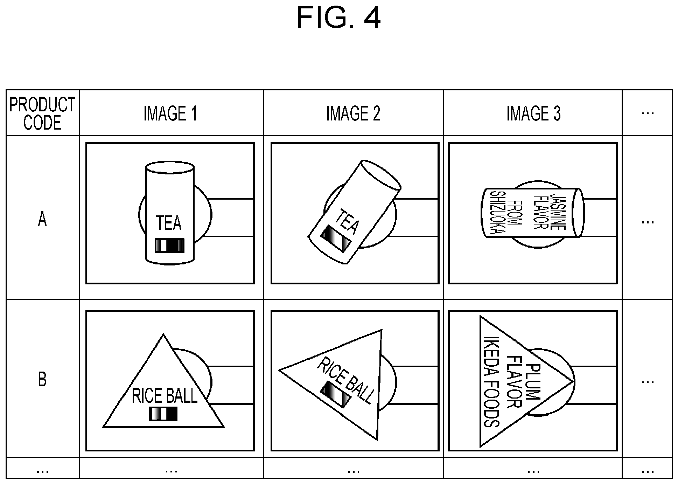

Fig. 4 is an image representation of a database registered through the image data registration process in the image data registration system according to the first embodiment. As seen from Fig. 4, the product images at the times before and after the acquisition of the product code can also be captured and stored in the second storage unit 3b as the data linked with the product code.

In the above description, the number of product images to be acquired at the times before and after the acquisition of the product code is determined only with the parameter m, but it is not always required to be determined with only one parameter. In another example, the number of product images to be acquired may be set with two or more parameters. Furthermore, setting of those parameters may be optionally changed.

An image data registration system according to a second embodiment of the present disclosure will be described below. The image data registration system according to the second embodiment has the same configuration as the image data registration system according to the first embodiment.

The image data registration system according to the first embodiment can efficiently acquire the images, but there is a possibility that the captured images may include a noise image (for example, an image in which a target product is not captured). In view of such a possibility, the image data registration system according to the third embodiment determines whether the captured images include the noise image, and does not store, in the second storage unit 3b, an image that has been determined as the noise image. With the above-mentioned feature, the image data registration system according to the third embodiment can efficiently acquire clean image data including no noise images. Thus, in the image data registration system according to the second embodiment, acquiring the noise image is set as another predetermined condition in the acquisition of the images in addition to the condition set in the image data registration system according to the first embodiment.

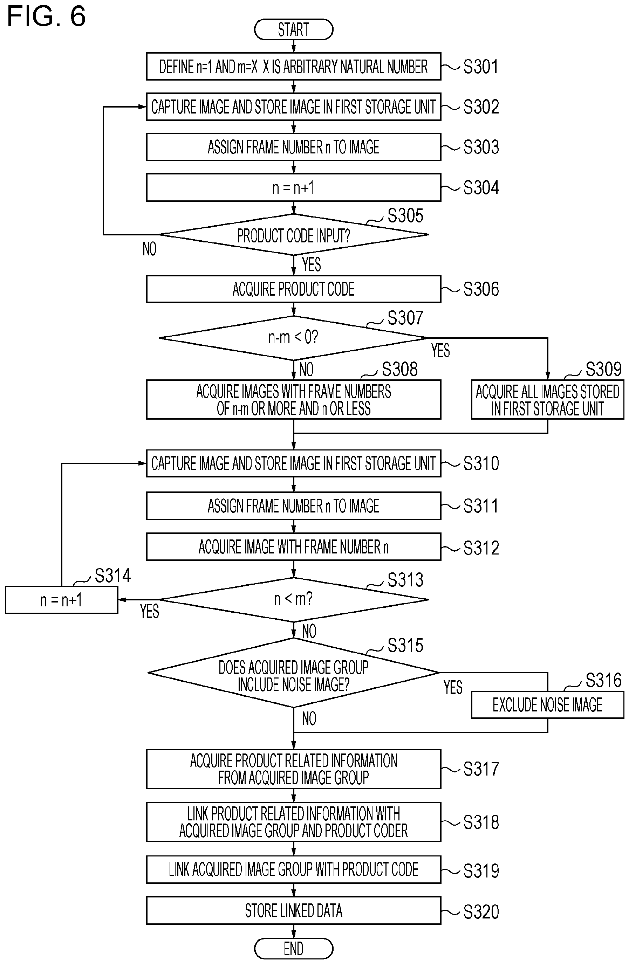

A processing flow of an image data registration method executed in the image data registration system according to the third embodiment of the present disclosure will be described below with reference to Fig. 6.

### <S201> to <S214>

These processing steps correspond to <S101> to <S114> in the processing flow of the image data registration method executed in the image data registration system according to the first embodiment. After the processing step <S214>, the processing advances to <S215>.

### <S215>

The first processing unit 21 determines whether the image group acquired from the first storage unit 3a includes the noise image. Whether a target image is the noise image may be determined based on a criterion of determining, as the noise image, for example, an image in which the image of the product is hardly captured, an image from which the product code cannot be recognized, an image in which part of an operator's body including one or more hands and fingers occupies a predetermined percentage. Alternatively, an image for which object detection or object recognition cannot be performed in accordance with the known image recognition process may be determined as the noise image.

If it is determined that the image group includes the noise image, the processing advances to <S216>. If it is determined that the image group does not include the noise image, the processing advances to <S217>.

### <S216>

The first processing unit 21 excludes, from the acquired image group, the image group that has been determined as the noise image. Then, the processing advances to <S217>.

### <S217> to <S218>

These processing steps correspond to <S115> to <S116> in the processing flow of the image data registration method executed in the image data registration system according to the first embodiment. After the processing step <S218>, the processing is ended.

An image data registration system according to a third embodiment of the present disclosure will be described below. The image data registration system according to the third embodiment has the same configuration as the image data registration systems according to the first embodiment and the second embodiment.

In addition to the functions of the image data registration system according to the second embodiment, the image data registration system according to the third embodiment acquires product related information and links the acquired product related information as one attribute of the linked data. The product related information contains, for example, text information on a label of the product. With the above-mentioned feature, the image data registration system according to the third embodiment can store the linked data with richer information in the second storage unit 3b.

A processing flow of an image data registration method executed in the image data registration system according to the third embodiment of the present disclosure will be described below with reference to Fig. 6.

### <S301> to <S316>

These processing steps correspond to <S201> to <S216> in the processing flow of the image data registration method executed in the image data registration system according to the third embodiment. After the processing step <S316>, the processing advances to <S317>.

### <S317>

The first processing unit 21 acquires the product related information for the image group acquired from the first storage unit 3a. Then, the processing advances to

### <S318>.

### <S318>

The second processing unit 22 links the product code and the image group acquired from the first storage unit 3a, with the product related information, and generates linked data. Then, the processing advances to <S319>.

### <S319> to <S320>

These processing steps correspond to <S115> to <S116> in the processing flow of the image data registration method executed in the image data registration system according to the first embodiment. After the processing step <S320>, the processing is ended.

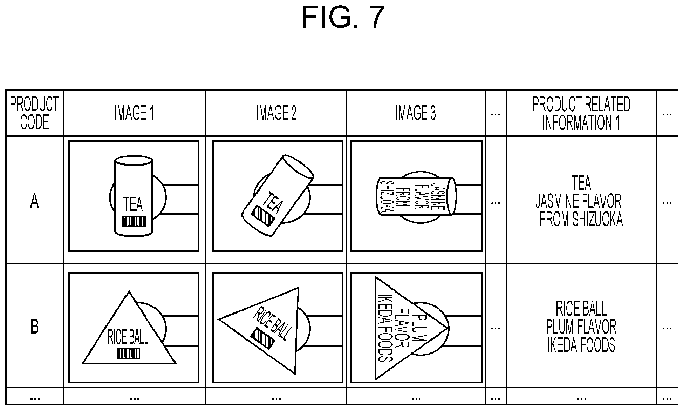

Fig. 7 is an image representation of a database registered through the image data registration process in the image data registration system according to the third embodiment. As seen from Fig. 7, the text information capable of being acquired from the image linked with the product code is linked as the product related information.

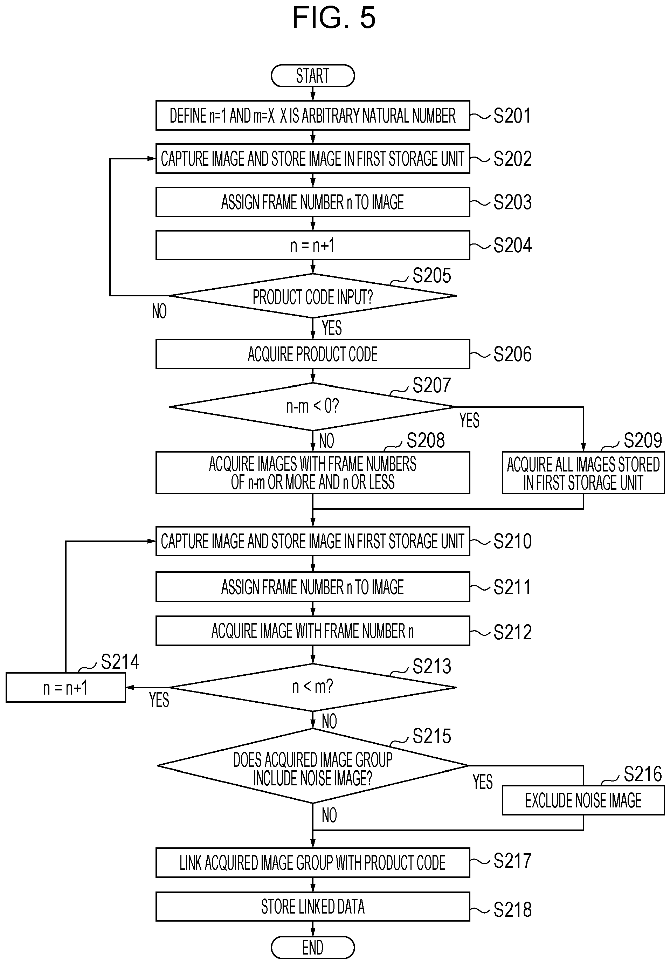

While the image data registration system according to the present disclosure has been described above with reference to the drawings and the embodiments, it is to be noted that those skilled in the art can easily modify or alter the image data registration system based on the present disclosure. For instance, while the processing flow of the image data registration process in each of the image data registration systems according to the first to third embodiments has been described above with reference to Figs. 3, 5 and 6, the processing flow may be repeated during a period until the operator enters an instruction of ending the registration operation to the image data registration system via an input device that is separately disposed. More specifically, in the image data registration system according to the first embodiment, for example, the processing flow illustrated in Fig. 3 may be modified as follows. After the processing step <S116>, it is determined whether the instruction of ending the registration operation is entered by the operator to the image data registration system. If the instruction of ending the registration operation is entered by the operator to the image data registration system, the processing is ended at once. If not so, the processing may return to <S102>. In that case, if it is determined in <S102> that the product code is not input, <S102> may be executed again. The above-mentioned point can be similarly applied to the processing flow according to each of the second to fourth embodiments as well. The product related information is not limited to text information and may be image information such as a logo, for example. Furthermore, a noise reduction process may be performed on the extracted product related information by using a suitable image recognition technique including a known text recognition technique or object recognition technique. In addition, two or more among the methods according to the present disclosure and methods modified or altered based on the present disclosure may be combined with each other. It is hence to be noted that modifications and alterations of the present disclosure, including those modified or altered methods, also fall within the scope of the present disclosure.

While the solutions proposed by the present disclosure have been described above with respect to the image data registration system, the image registration apparatus, and the image data registration method, it is to be understood that the present disclosure can also be implemented in the form incorporating any of the above-mentioned system, apparatus, and method, or in the form of a program substantially corresponding to any of the above-mentioned system, apparatus, and method or a storage medium on which the program is recorded, and that those forms also fall within the scope of the present disclosure.

### Industrial Applicability

For example, learning data for mechanical learning including deep learning or dictionary data for pattern matching can be constructed by utilizing the images and the product related information that are acquired with the image data registration system and the image data registration method according to the present disclosure.

### Reference Signs List

1 input unit
2 image processing unit
3 storage unit
3a first storage unit
3b second storage unit
4 holder
5 flat placement member
6 housing
21 first processing unit
22 second processing unit

## Claims

1. An image data registration system comprising:
a first storage unit; and
an image processing unit,
wherein the first storage unit stores images input from an input unit, and
the image processing unit acquires at least one image satisfying a predetermined condition from the images stored in the first storage unit and links the image acquired by the image processing unit with the input product code.

2. The image data registration system according to claim 1, wherein the image processing unit stores the product code and the image linked with each other in a second storage unit.

3. The image data registration system according to claim 1 or 2, wherein the predetermined condition includes a condition that the images acquired by the image processing unit are an image captured at a time of acquiring the input product code by the image processing unit and images captured at times before and after acquisition of the product code.

4. The image data registration system according to any one of claims 1 to 3, wherein the predetermined condition includes a condition that the image acquired by the image processing unit is not a noise image.

5. The image data registration system according to any one of claims 1 to 4, wherein the image processing unit extracts product related information from the image acquired by the image processing unit.

6. The image data registration system according to any one of claims 1 to 5, wherein the input unit is disposed in a payment machine used for payment of products purchased by consumers.

7. An image data registration method comprising:
storing an image input from an input unit in a first storage unit;
acquiring a product code input from the input unit;
acquiring at least one image satisfying a predetermined condition from the first storage unit; and
linking the image acquired from the first storage unit with the product code.
